# EUROPEAN PATENT APPLICATION

(11) **EP 3 588 187 A1**
(43) Date of publication of application: **01.01.2020**
(21) Application number: 19181875.6
(22) Date of filing: 22.06.2019
(51) Int. Cl.: G03B 21/00, F21S 10/00, G02B 1/10

(54) **AN IMAGE PROJECTION SYSTEM**

(30) Priority: 22.06.2018 IT 201800006602; 20.06.2019 IT 201900009681
(71) Applicant: Sunland Optics Srl, 89127 Reggio Calabria (IT)
(72) Inventor: De Franco, Luca Antonio, 89131 Reggio Calabria (IT); Rymenans, Maarten Benjamin, 2550 Waarloos/Kontich (BE)
(74) Representative: Perrotta, Aldo

(57) **Abstract**

The subject of the invention is an image projection system, comprising a LED light source and a gobo made of borosilicate glass, or of ceramic glass or a substrate of quartz glass (a support for image formation), which reduces the variation in colour temperature of the LED source and prevents the shortening of the life of the LED due to the light being retro-reflected from the gobo.

This occurs by applying an engineered nanostructure or microstructure surface of a grey colour on the side of the gobo facing the light source, that reflects a part of the light that does not pass through the gobo and reduces the light retro-reflected by the gobo towards the LED source. This reflected light can heat up the LED module, leading to changes to the colour temperature and to shortening the duration of the life of the LED module itself.

## Description

### Abstract

The subject of the invention is an image projection system, comprising a LED light source and a gobo made of borosilicate glass, or of ceramic glass or a substrate of quartz glass (a support for image formation), which reduces the variation in colour temperature of the LED source and prevents the shortening of the life of the LED due to the light being retro-reflected from the gobo.

This occurs by applying an engineered nanostructure or microstructure surface of a grey colour on the side of the gobo facing the light source, that reflects a part of the light that does not pass through the gobo and reduces the light retro-reflected by the gobo towards the LED source. This reflected light can heat up the LED module, leading to changes to the colour temperature and to shortening the duration of the life of the LED module itself.

### Field of the invention

The present invention concerns an image projection system comprising a LED light source and a gobo, made of borosilicate glass, or of ceramic glass or a substrate of quartz glass. In applications for the entertainment sector, the support for the formation of an image is called a GOBO. The subject of the invention is an image projection system comprising a LED light source and a gobo, which reduces the variation in colour temperature of the LED source and prevents the shortening of the life of the LED due to the light being retro-reflected from the gobo.

### State of the Art.

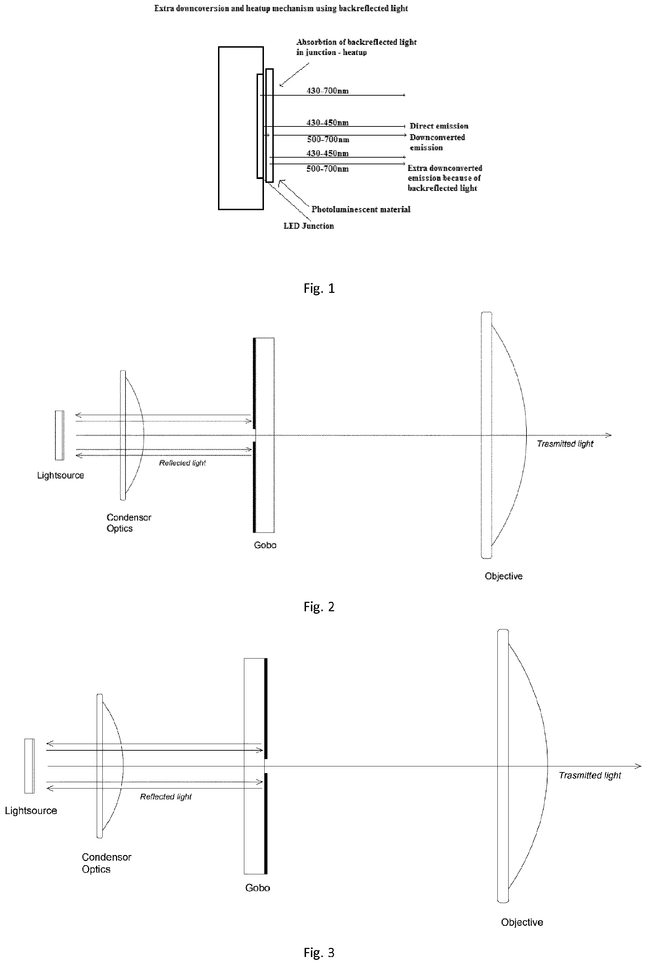

Various systems of projection exist that use a white LED (Fig. 1) as a light source.

The gobo is generally made of a metallic or transparent substrate and of a coating that can be of a variety of materials and with diverse characteristics.

In gobos of metal, the image is formed by openings in a metal plate and the coating is not necessary but may be applied to improve the quality of the image.

Glass gobos or those with a transparent substrate have a coating in which the image is chemically engraved or obtained by laser ablation.

The coating is removed selectively, in order to create a passage for the light, that can have various shapes and dimensions such as to create texts, designs, images on the gobo, which are then projected by the projection system.

The coating is made of a metallic layer and/or of multi-layers of dielectric materials as patent application WO2012092028A1 describes.

Patent application WO2012092028A1 also describes the use of a further reflective coating (also in aluminium) to be placed on the side of the gobo facing the lens, which has the function of blocking the visible light radiations that pass through the multi-layers of dielectric materials.

This operation is schematized in Figure 2.

The principal function of this coating is therefore that of
1. having the possibility of engraving any image.
2. blocking the visible light coming from the light source in all the areas in which the image is not present.

As additional features there are also coatings that serve to protect the underlying layers: patent application US2013258678A1 describes, in fact, the use of a metallic or dielectric coating of high reflectivity to protect the underlying coatings and the substrate from the radiations of the light source. This is schematized operation in Figure 1.

Furthermore, there are coatings that serve to eliminate the retro reflections coming from the lenses of the projection system, as described in patents US 20090097260A1 and US2013258678A1, that use a black surface and in patent WO2012092028A1, that uses a rough black surface.

### PRODUCTION PROCESSES

The process of obtaining the image can be of simple piercing, in the case of metallic gobos, or by laser ablation or chemical photogravure for gobos made of glass.

The process for creating a chemically engraved gobo is described by Ziegler and Mahanay in the documents GB2294909 and US19940339014.

WO2012092028A1 describes the process of production of a gobo by a system of micro-machining to selectively remove the thin film deposited on the substrate.

### THE PROBLEM OF COLOUR TEMPERATURE VARIATION IN LED SOURCES

Many modern projectors use a high-power white LED as a light source.

Said white LED emits at a wavelength of about 430-450 nm (blue) and is coated with photoluminescent materials (phosphors), to convert part of the short wavelengths to long wavelengths, typically in the 500-700 nm range. This technique is described by Nichia in the patent application US005998925A.

A LED light conversion system is characterized by a Down-Conversion Efficiency factor, indicated with the acronym DCE, which expresses the efficiency of the light conversion of the photoluminescent material and is expressed by the ratio between the light flux generated by the source after depositing the material, and that generated by the same source before depositing the material.

When the light of such a white LED is used as a light source in a projection system that uses a gobo, part of the light passes through the gobo and a part of the light will be reflected towards the source of light, according to the model on the gobo. In high-powered projectors, with white LED of 100 watts or more, the gobo must have a reflective surface to reflect the greater part of the light coming from the LED. Generally, the gobo has an aluminium coating that reflects 90% of the light. In this way, the energy absorption of the gobo is limited, not allowing the glass substrate to reach critical temperatures that would lead to the gobo breaking.

This causes the white LED to capture part of the retro-reflected light/energy, causing an increase in temperature. In the case where the cooling of the LED light source is not controlled in a precise and active manner, this can lead to a shorter life for the LED. Furthermore, because the spectrum of the LED/colour temperature is not linear with its temperature/power, a shift results in the colour temperature/spectrum.

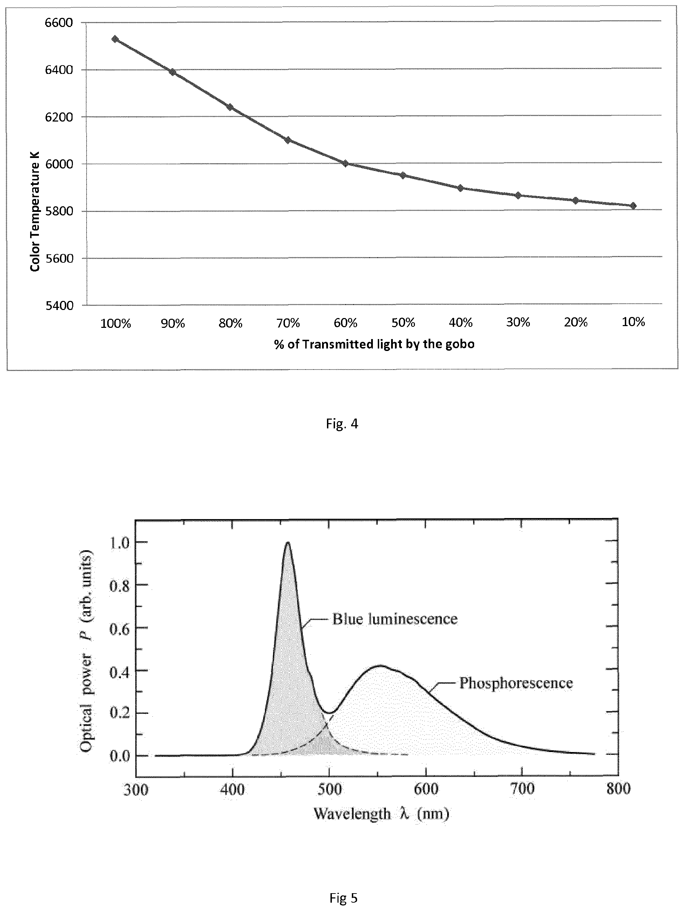

Even worse, the retro-reflected short-wave light component will produce an excessive fluorescent activity of the coating on the LED, leading to an increase in the long-wave light emissions. Consequently, there is an excessive photoluminescence in the longest wavelengths and a variation of the DCE, with consequent variations in the spectrum of the LED, while the colour temperature decreases. This has been experimentally confirmed (see Figure 4).

Using a normal glass gobo with nano-structured surfaces facing towards the lens and with the reflecting surfaces facing towards the source (until today one of the most common configurations adopted in the sector of projections in entertainment) with 9 different patterns with a percentage of removal of the reflective coating, thus of light transmitted increasingly decreasing, and therefore of light reflected by the coating towards the source increasingly increasing, in a LED matrix model projection system of 400W we have observed the behaviour shown in Figure 5.

The colour temperature of the source light without any gobo (100% Transmission) is 6580K. Inserting a gobo with increasing percentages of reflecting surfaces (and decreasing percentages of transmitted light) a progressive decrease of the Colour Temperature is measured. Measurements carried out with a Minolta CL200A Colorimeter.

This effect had already been discovered by Jorgensen, patent DK2011050084.

In said document Jorgensen affirms that the retro-reflecting light coming from a gobo can be re-utilized, and that the LED emission of white light can be increased by 19%. Jorgensen also mentions that the retro-reflected light is converted into longer wavelengths.

Jorgensen declares the over-emission of long wavelengths to be an advantage for a greater light output. But the colour temperature decreases, and this effect can be undesirable in applications in which the correct colour temperature is more important than the light output. When the light is reflected onto a white LED, the energy that the LED will have to dissipate will increase. Furthermore, the retro-reflected short-wave light will be converted by the photoluminescent materials, leading to an increase in the emission of long wavelengths by the white LED. This results in a downwards shift in the colour temperature.

Let us summarize the State of the Art: Until now, the GOBO has always had a reflective surface. In the case of a glass gobo, the coating can be on the side of the lens (Figure 2) or on the side of the light source (Figure 3), but with the reflecting side always facing the light source in order to repel the light energy that does not pass through the gobo. Patent application WO2012092028A1 describes a high-resolution system for projection, in which a gobo has a reflecting aluminium surface or a rough black finish. The aim of the solution proposed in WO2012092028A1 is that of blocking the light passing from the other layers or that of avoiding the reflection of light towards the optical system of the projector. The solution proposed in WO2012092028A1 resolves the problem of the reflection of the light being retro-reflected towards the optics of the projection system, by having the light that could be retro-reflected absorbed by a matt black aluminium surface. The solution proposed in WO2012092028A1 is not functional if applied from the side of the light source, in that the energy arriving from the light source is greater than that which arrives from the lenses, and if it is absorbed by the gobo it could lead to the damage or the breakage of the gobo itself.

### Summary of the invention

The present invention resolves the problem of the variation of the colour temperature of the source using a gobo with a coating deposited from the side of the light source with an engineered, grey, micro-structured or nano-structured surface, capable of preventing the radiations emitted by the source and affecting the gobo from becoming totally reflected towards the source again.

The coating, subject of the invention, can also be used in systems with high-powered sources if opportunely protected by a further dichroic coating deposited over the preceding one and which increases the reflections reducing the quantity of energy absorbed by the underlying coating.

A part of the light that does not pass through the gobo is absorbed by the gobo itself and a part of the light is retro-reflected in directions that do not affect the light source, avoiding it heating up.

The invention presented here permits the better preservation of the colour temperature of the projector when a gobo is used, without the necessity of a filter to correct the colour.

The principal aim of the present invention is that of creating an image projection system, comprising a LED light source and a gobo made of borosilicate glass, or of ceramic glass or a substrate of quartz glass, a lens characterized by the fact that the surface of the gobo facing towards the light source has a layer of aluminium coating with a nano-structured or micro-structured surface.

Another aim of the invention is to limit the absorption of radiations from the gobo to limit its heating up and to prolong its service life. Said aim is realized with a further layer of dichroic coating.

The use of a dichroic coating to protect the underlying layers is a technique that is already known and is described in US2013258678A1 and WO2012092028A1.

The novelty of the present invention is the fact that this layer, combined with the underlying micro-structured or nano-structured surface, generates a surface with the characteristic of increasing the reflectivity and at the same time directing the retro-reflections in such a way as to not make them turn towards the light source.

Other characteristics and advantages will appear clear from the following figures, given for explanatory and non-limiting purposes.

### A brief description of the Figures

Figure 1 shows the effect of the extra photoluminescence caused by the reflected light.
Figure 2 shows a typical setup of a gobo with a reflecting side facing always towards the light source and with a coating facing towards the light source.
Figure 3 shows a typical setup of a gobo with a reflecting side facing always towards the light source and with a coating facing towards the lens.
Figure 4 shows the colour temperature with 9 different patterns with a percentage removal of the reflective coating.
Figure 5 shows the emission spectrum of a white Nichia LED, based on the use of phosphors.
Figure 6 shows a setup according to the invention, that provides for the assembly of the gobo with a nano-structured surface protected by a high-reflectivity dichroic coating facing the light source.
Figure 7 shows a setup according to the invention that provides for the assembly of the gobo with an engineered surface protected by a high-reflectivity dichroic coating facing the lens.
Figure 8 shows how the spectrum of emissions of a LED source subject to reflected light, with or without a reflector, varies.
Figure 9 shows the colour temperature measurements, taken using the gobo subject of the invention, compared to the use of a standard gobo.

### Description of an embodiment of the invention

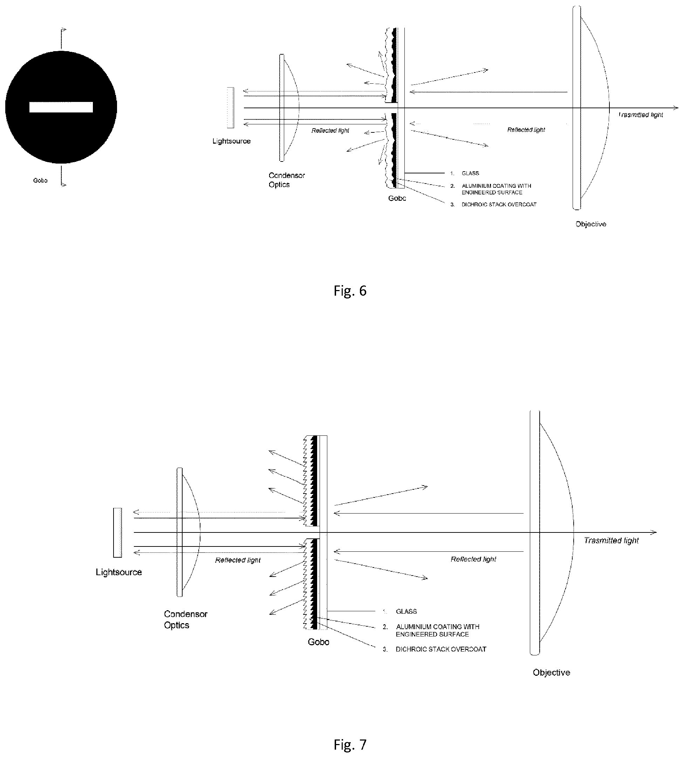

The invention is an image projection system, see Figures 6 and 7, comprising:
- A LED light source
- An optical capacitor
- A gobo, made of: borosilicate glass, or a ceramic glass or a quartz glass substrate,
- A lens
- A layer made of a coating of black chromium oxide or similar, on the face of the gobo facing towards the lens,
- a coating of grey coloured aluminium with a nano-structured surface, with a surface roughness created by columnar growth and the formation of crystallites, deposited on the surface facing towards the side of the light source. The rough surface will reflect the light in a wide range of angles, thus reducing the amount of light reflected directly towards the light source and limiting, in this way, the excess photoluminescence and therefore reducing the colour temperature variation
or, alternatively,
- A grey coloured aluminium coating with an engineered micro-structured surface, that is structured to have a micro-surface with regular angles, in such a way that the radiations are not reflected towards the light source and said coating is deposited on the surface facing towards the side of the light source. Said engineered surface can be created by masking or by photolithography and directional incision, such as RIE (Reactive Ion Etching). As no radiations are reflected towards the light source, there will not be any added photoluminescence and the colour temperature will remain unvaried
- A dichroic coating constituted, for example, of layers of SiO2 e TiO2, deposited over the aluminium coating described in 3.1 and 3.2 to increase the reflectivity up to 99%, generally in the visible range of 400-700nm. In this way the absorption of light radiations by the gobo is reduced and the gobo is protected from overheating, which could otherwise lead to its breakage.

The final result will be a gobo with a side facing towards the lens that absorbs the reflected light of the lens, improving in this way the quality of the projected image, and with a side facing towards the LED light source, having an engineered nano-structured or micro-structured surface capable of reducing the colour temperature variation and capable of withstanding the overheating due to high-powered LED sources.

The use of just the engineered nano-structured or micro-structured surface works very well to contain or eliminate the colour temperature variations of the LED source but would only find opportunities for use with low-intensity sources, in that the fraction of un-reflected light is absorbed by the coating; the greater the light intensity of the LED source, the greater the fraction of radiation absorbed by the coating will be. This absorption of energy radiation leads to a gradual rise in the temperature of the gobo and its breakage.

A high-reflectivity dichroic coating in the visible part, always deposited on the LED source side of the gobo, not on the engineered nano-structured or micro-structured surface but directly on the glass, would have no influence on the colour temperature variation as it would not reduce the light reflected towards the source itself.

The present invention, providing the overlaying of a high-reflectivity dichroic coating on the engineered nano-structure or micro-structure determines, in fact, the constitution of a surface with a greater reflectivity value compared to that of only an engineered nano-structured or micro-structured surface, and therefore having characteristics suitable for the gobo to be used also with high-powered light sources (>400W)

The high-reflectivity dichroic coating does not, in fact, alter the particular characteristic of the underlying surface and that is its capacity to deviate the light radiations emitted by the LED source in disorderly or defined directions, but has the sole function of reducing the quantity of radiations arriving at its surface, reflecting a percentage of them.

The only engineered nano-structured or micro-structured surface reflects a percentage towards the source that varies between 10% and 20% (depending on the surface formation modality), the high-reflectivity dichroic coating alone can reflect up to 99% of the radiations (depending on the number and thickness of the layers of which it is composed). The overlaying of the dichroic coating on the engineered nano-structured or micro-structured surface generates a surface with a reflectivity that can vary between 10% and 40%, but which always maintains a reduction in the colour temperature variation, that is the principal aim of the invention.

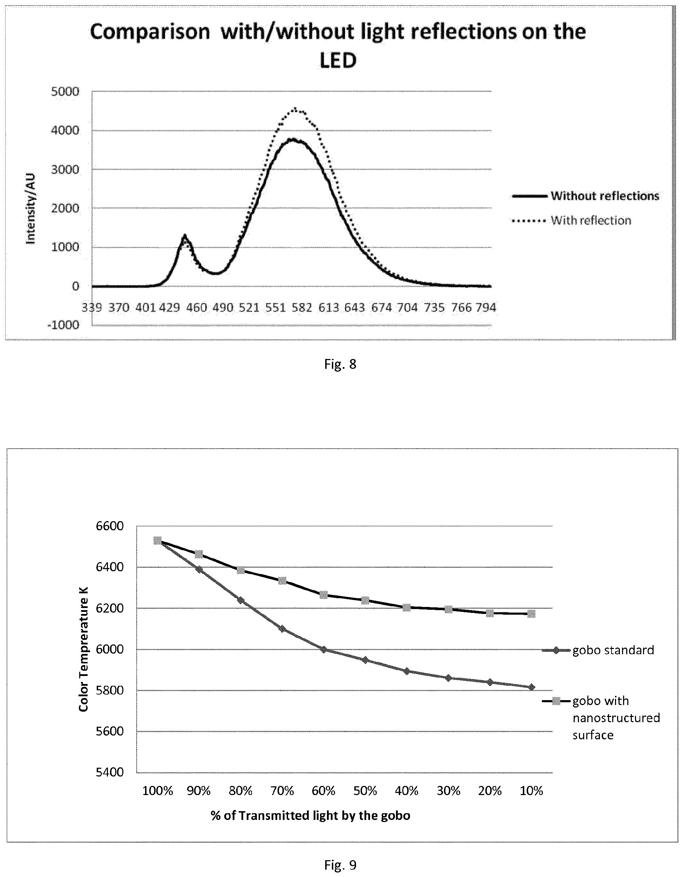

The projection system illustrated in Figure 6 foresees "a grey coloured aluminium coating with a nano-structured surface, with a surface roughness created by the columnar growth and the formation of crystallites, deposited on the surface facing towards the side of the light source. The rough surface will reflect the light in a wide range of angles, thus reducing the amount of light reflected directly towards the light source, limiting, in this way, the excess of photoluminescence and so reducing the colour temperature variation." The projection system illustrated in Figure 7 foresees "an aluminium coating with an engineered micro-structured surface, that is structured to have a micro surface with regular angles. Said coating is deposited on the surface facing towards the light source side so that the radiations are not reflected towards it. Said engineered surface can be created by masking or by photolithography and directional engraving, such as RIE (Reactive Ion Etching). As no radiation is reflected towards the light source, there will not be any added photoluminescence and the colour temperature will remain unvaried." Figure 8 shows the spectrum of a 3-Watt LED. It has an emission area of 2x2 mm with a spherical plastic lens of approximately 5mm in diameter. The values depend on the sensitivity of the spectrometer itself.

The aluminium reflector was created with a sheet of aluminium placed in front of the LED. A small hole of about 0.2 mm in diameter was created to allow a small amount of light to come out, simulating a gobo that reflects the greater part of the light in the LED, and only a small part of the light is let out through the hole.

To understand the causes of these variations, it is necessary to examine the operating principle of a light conversion white LED.

A LED is used as a primary light source, generally LEDs with blue semi-conductors, together with photoluminescent materials, defined as phosphors, capable of absorbing part of the radiation emitted by the source and of re-emitting it at greater, longer wavelengths.

The light emitted by the source and that emitted by the materials of conversion combine, generating white light.

In Figure 9 the colour temperature measurements, obtained with the use of the gobo, subject of the invention, are shown, confronted with the use of a standard gobo.

The discovery, it is to be understood, is not limited to the representations given by the illustrations but may be modified and perfected by those skilled in the art, without exceeding the limits of patent.

The present invention permits numerous advantages and to overcome difficulties that could not be overcome with the systems currently on sale.

## Claims

1. An image projection system comprising a LED light source and a gobo created of borosilicate glass, or ceramic glass or a substrate of quartz glass, and a lens **characterized by** the fact that the surface of the gobo facing towards the light source has a layer of coating of grey-coloured aluminium, with a nano-structured or micro-structured surface that does not reflect the radiations towards the light source.

2. An image projection system according to claims 2 or 3, **characterized by** the fact that the grey-coloured nano-structured layer of aluminium with a surface roughness created by the columnar growth and the formation of crystallites does not reflect the radiations towards the light source, because it disperses them in many directions.

3. An image projection system according to claims 2 or 3, **characterized by** the fact that the layer of micro-structured aluminium has an engineered surface, which is structured to have a micro-surface with regular angles, that do not reflect the radiations towards the light source.

4. An image projection system according to claim 1, **characterized by** the fact that the surface of the gobo facing towards the light source has a further layer of dichroic coating.

5. An image projection system according to claim 4, **characterized by** the fact that the further dichroic layer is overlaid on the aluminium coating with a nano-structured or micro-structured surface from the side of the LED light source so that it increases the reflectivity of the surfaces facing towards the source, but maintains the characteristic of not reflecting the radiations towards the light source.

6. An image projection system according to claims 4 or 5, **characterized by** the fact that the layer of dichroic coating is constituted of layers of SiO2 e TiO2, deposited over the aluminium coating.
